(19) Europäisches Patentamt
European Patent Office
Office européen des brevets

(11) Veröffentlichungsnummer : **0 141 327 B2**

# (12) NEUE EUROPÄISCHE PATENTSCHRIFT

(45) Veröffentlichungstag der neuen Patentschrift : **19.08.92 Patentblatt 92/34**

(51) Int. Cl.[5] : **C08F 228/02,** C08F 246/00, C09K 7/02, C04B 24/26

(21) Anmeldenummer : **84112373.0**

(22) Anmeldetag : **13.10.84**

## (54) Wasserlösliche Mischpolymerisate und deren Verwendung als Dispergatoren für Feststoffe.

(30) Priorität : **22.10.83 DE 3338431**

(43) Veröffentlichungstag der Anmeldung : **15.05.85 Patentblatt 85/20**

(45) Bekanntmachung des Hinweises auf die Patenterteilung : **03.05.89 Patentblatt 89/18**

(45) Bekanntmachung des Hinweises auf die Entscheidung über den Einspruch : **19.08.92 Patentblatt 92/34**

(84) Benannte Vertragsstaaten : **AT BE CH DE FR GB IT LI NL**

(56) Entgegenhaltungen :
**DE-A- 3 123 732**
**DE-B- 2 444 108**
**GB-A- 2 077 278**
**JP-A-79 138 024**
**JP-A-80 160 062**
**JP-A-81 073 600**

(56) Entgegenhaltungen :
**JP-A-83 015 512**
**US-A- 3 203 938**
**US-A- 4 015 991**
**US-A- 4 293 427**

(73) Patentinhaber : **HOECHST AKTIENGESELLSCHAFT**
**Postfach 80 03 20**
**W-6230 Frankfurt am Main 80 (DE)**

(72) Erfinder : **Hille, Martin, Dr.**
**In den Eichen 46**
**W-6237 Liederbach (DE)**
Erfinder : **Friede, Wolfgang**
**Oberortstrasse 29**
**W-6236 Eschborn (DE)**
Erfinder : **Wittkus, Heinz**
**Manderscheider Strasse 9**
**W-6000 Frankfurt am Main 71 (DE)**
Erfinder : **Engelhardt, Friedrich, Dr.**
**Hünfelder Strasse 20**
**W-6000 Frankfurt am Main 61 (DE)**
Erfinder : **Riegel, Ulrich**
**Steinäckerstrasse 6**
**W-6000 Frankfurt am Main 61 (DE)**

EP 0 141 327 B2

## Beschreibung

Die vorliegende Erfindung betrifft Mischpolymerisate als Dispergatoren für Feststoffe in vorzugsweise wäßriger Lösung. Dabei kann die Natur der Feststoffe sehr unterschiedlich sein und deren Konzentrationen in der flüssigen Phase sehr stark schwanken. So werden durch das erfindungsgemäße Verfahren Feststoffe in Konzentrationen von wenigen mg/l ebenso wirkungsvoll dispergiert wie auch in feststoffreichen Systemen z.B. Bohrspülungen, mineralischen Bindern wie Zement- und Gipsschlämme, Kaolin-, Kohle-, Kalziumkarbonatschlämmen usw. mit teilweise extrem niedrigen Lösemittelgehalten. Bei den hochkonzentrierten Feststoffdispersionen ermöglicht das erfindungsgemäße Verfahren eine Minimierung des Wassergehaltes und eine Reduktion der Viskosität, was technische Vorteile bietet.

Für die verschiedensten Dispersionen wie Bohrspülungen, Zementschlämme, Kohleaufschlämmungen, Pestizid- und Farbpigmentdispersionen usw. werden zur Optimierung der Eigenschaften sehr unterschiedliche Dispergierhilfsmittel eingesetzt.

In Bohrspülungen verwendet man als Dispergatoren z.B. Polyphosphate, Quebracho und besonders Lignolsulfonate und Lignite z.B. gemäß DAS 1183 874. In neuerer Zeit haben als Verflüssiger für hohe Temperaturen Copolymere aus Styrolsulfonat und Maleinsäureanhydrid gemäß US Patent Nr. 3 730 900 Eingang in die Bohrspültechnik gefunden.

Muß für Bohrspülungen salines Wasser beim Durchbohren von Salzformationen oder beim Bohren auf offenem Meer verwendet werden, dann sind zur Stabilisierung dieser Dispersionen Schutzkolloide wie Stärke und Stärkederivate, Carboximethylhydroxiethyl-carboxymethylcellulosen, Biopolymere und teilverseifte Acrylamide notwendig. Bei sehr hohen Feststoffgehalten werden niedermolekulare ionische Polymere bevorzugt. Der Einsatz der Additive für Bohrspülungen ist sehr ausführlich in: George R. Gray, H.C.H. Darly, Walter F. Rogers « Composition and Properties of Oil Well Drilling Fluids, Fourth Edition, Gulf Publishing Company Houston/Texas 1980 » beschrieben.

In letzter Zeit haben sich Mischpolymerisate aus Vinylsulfonat und Vinylamid gemäß DOS 2 931 897 und DAS 2 444 108 bei Einsatz in salinen Bohrspülungen zur Stabilisierung vorab eingestellter Eigenschaften in sehr tiefen heißen Bohrungen sehr gut bewährt.

In Zementschlämmen, die verpumpt werden, setzen Dispergiermittel die Viskosität herab. Dies erleichtert den Pumpvorgang und erlaubt es, den Wassergehalt zu reduzieren, was die mechanischen Eigenschaften des ausgehärteten Betons verbessert. In Zementschlämmen kommen Lignosulfonate, Polyacrylsäuren, Kondensationsprodukte aus Mononaphthalinsulfonaten und Formaldehyd gemäß US-PS 3 465 825 und N-sulfoalkylsubstituierte Acrylamide gemäß US-PS 4 053 323 als Dispergiermittel zum Einsatz. Je nach Anwendungsgebiet setzt man Zementschlämmen noch Wasserverlustreduzierer, Abbindeverzögerer oder auch Abbindebeschleuniger zu, die mit dem jeweiligen Dispergiermittel verträglich sein müssen. Dies schränkt die Verwendbarkeit der Dispergatortypen ein. So können z.B. beim Einsatz von Kalziumsalzen als Abbindebeschleuniger keine Polyacrylsäuren als Dispergatoren verwendet werden.

Auch teilverseifte Polyacrylamide als Wasservelustreduzierer lassen in ihrer Wirkung in Gegenwart von Kalziumchlorid stark nach. Bei besonders hohen Belastungen der Dispersionen z.B. von Zementschlämmen und Bohrspülungen auf Basis Salzwasser für sehr tiefe und heiße Bohrungen, ist es schwierig, optimale Eigenschaften einzustellen. Bekannt ist auch die Verwendung von Copolymerisaten aus (Meth)acrylamidoalkylsulfonsäuren und (Meth) acrylamid als Bohrhilfsmittel (US-A 4 293 427). Aus DE-B 2 444 108 ist zum gleichen Zweck die Verwendung eines Copolymerisats bekannt, das aus Vinyl- bzw. Alkylsulfonsäuren, (Meth) acrylamiden und N-Vinyl-N-alkyl-carbonamiden besteht.

Weiterhin finden als Dispergiermittel die unterschiedlichsten nicht-, an- und kationischen Tenside Verwendung.

Gegenstand der Erfindung ist die Verwendung von Copolymeren bestehend zu 5-95 Gew.-% aus (Meth) acrylsäure oder deren Ammonium- oder Alkalisalzen oder teilverseiftem (Meth)acrylamid und zu 5-95 Gew.-% aus Gruppen der Formel II, III, oder IV

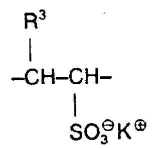 (II)

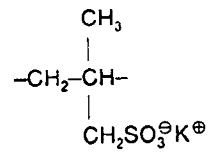 (III)

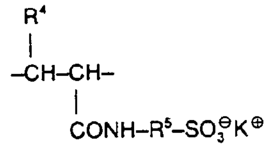 (IV)

wobei $R^3$ Wasserstoff, $C_1$-$C_6$-Alkyl oder Phenyl und $R^4$ ein Wasserstoffatom oder $CH_3$ und $R^5$ $C_1$-$C_{10}$-Alkylen und $K^+$ Ammonium, Lithium, Natrium oder Kalium bedeuten, ausgenommen solche Copolymeren, die aus hydrolysiertem Acrylamid und 2-Acrylamido-2-methylpropansulfonsäure oder aus Acrylamid bzw. Acrylsäure und Ethylensulfonat bestehen, als Dispergiermittel in Zementschlämmen und Bohrspülungen.

Die Molgewichte der Mischpolymerisate liegen zwischen 2 000 und 6 Mio, vorzugsweise zwischen 10 000 und 500 000. Höhere Molgewichte benötigt man bei extremen Anforderungen an die Suspension, wie hohe Temperaturen und Salzgehalte sowie niedrige Wasserabgaben.

Die Herstellung der zu verwendenden Copolymerisate kann in an sich bekannter Weise durch Umsetzung der Monomeren bei Temperaturen zwischen etwa - 10 und + 80 °C, vorzugsweise bei 20 bis 60°C, in Gegenwart von geeigneten Polymerisationskatalysatoren vorgenommen werden. Die Polymerisation erfolgt zweckmäßig in wäßriger Phase, ggf. können jedoch auch wäßrige Lösungen von wassermischbaren organischen Lösungsmitteln, wie z.B. Methanol, Ethanol, tert. Butylalkohol, Tetrahydrofuran oder Dimethylformamid als Polymerisationsmedium dienen. Als Polymerisationskatalysatoren kommen vor allem Perverbindungen wie Benzoylperoxid, Acetylperoxid, tert. Butylhydroperoxid oder Alkali- und Ammoniumperoxiddisulfat oder auch Redox-Systeme wie N-p-Tolylsulfonylmethylcarbamidsäuremethylester/Ammoniumperoxiddisulfat, in Betracht.

Gegebenenfalls kann auch der Zusatz von Cokatalysatoren wie Dibutylaminhydrochlorid oder Spuren von Kupfersalzen zweckmäßig sein. Als Polymerisations-Initiatoren können auch Verbindungen wie z.B. Diazoisobutyronitril zugesetzt werden.

Man verwendet vorzugsweise folgende Monomere für die Herstellung der zu verwendenden Mischpolymerisate:

1. Acrylsäure
2. Vinylsulfonsäure
3. Methallylsulfonsäure
4. Acrylamidopropenylmethylensulfonsäure.

Die Mischpolymrisate fallen als viskose, vorzugsweise wäßrige Lösungen an. Sie können in dieser Form verwendet werden. Ist es beabsichtigt, die Mischpolymerisate in fester Form herzustellen, dann können die Polymerisatlösungen einen Verdampfungs- oder Trockenprozeß, z.B. Sprüh- oder Walzentrocknung unterworfen werden. Für die Anwendung ist es sinnvoll, daß die Sulfogruppen in den Mischpolymerisaten in Form der Ammonium- oder Alkalisalze vorliegen.

Die Mischpolymerisate wirken sehr effektiv dispergierend auf sehr geringe Mengen von Feststoffen, z.B. Calciumcarbonat in technischen Kühlkreisläufen von nur z.B. 10 ppm oder bei sehr feststoffreichen Zementschlämmen bis zu 80% Feststoffgehalt. In den Kühlwässern ist die minimale Einsatzkonzentration 5 ppm, während sie in den Zementschlämmen bis zu 20% betragen kann. Die hohen Konzentrationen in den Zementschlämmen verbessern merklich die mechanischen Eigenschaften des ausgehärteten Zements. Nur die sehr gute Dispergierwirkung der Mischpolymerisate ermöglicht es, die genannten hohen Konzentrationen dieser Polymeren im Zementschlamm homogen zu verteilen.

Beispiele:

1. Dispersion von Calciumcarbonat

Benutzt wurde eine Aufschlämmung von frisch gefälltem Calciumcarbonat (100 mg/l) in Wasser. 500 ml dieser Aufschlämmung wurden in Meßzylindern 25, 100 und 500 ppm eines Mischpolymerisats, bestehend aus 10% Methallylsulfonsäure und 90% Acrylsäure zugesetzt (K-Wert ca. 30). Es wurde geschüttelt, ca. 2 Stunden

stehengelassen, anschließend die oben stehende Menge Wasser (250 $m^3$) dekantiert und der Feststoffgehalt darin bestimmt.

Ergebnis
Tabelle 1

| Einsatzmenge | dispergiertes Calciumcarbonat im dekantierten Wasser in % der Ausgangskonzentration |
|---|---|
| 0 ppm | 0 |
| 25 ppm | 22 |
| 100 ppm | 47 |
| 500 ppm | 77 |

Tabelle 2
2. Bohrspülungen
Basisspülung: 1 l Wasser, 200 g Formationston, 40 g Bentonit

| Bohrsspülungen | Wasserverlust nach API/$cm^3$ | | scheinbare Viskosität | | Fließgrenze | |
|---|---|---|---|---|---|---|
| | bei 20 °C | 15 h/200 °C | bei 20 °C | 15 h/200 °C | bei 20 °C | 15 h/200 °C |
| Basisspülung | 18 | 22 | 32 | 44 | 34 | 46 |
| Basisspülung + 10 g Gips | 38 | 48 | 18 | 21 | 14 | 20 |
| Basisspülung + 10 g Mischpolymerisat A | 7,5 | 7,8 | 7 | 8 | 2 | 1 |
| Basisspülung + 10 g Mischpolymerisat A + 10 g Gips | 9,5 | 11 | 10 | 9 | 5 | 4 |
| Basisspülung + 10 g Mischpolymerisat B | 6,8 | 7,2 | 8 | 7 | 2 | 3 |
| Basisspülung + 10 g Mischpolymerisat B + 10 g Gips | 8,5 | 9,5 | 9 | 7 | 5 | 3 |
| Basisspülung + 10 g Polyacrylsäure | 9,5 | 11,2 | 26 | 16 | 8 | 6 |



Tabelle 2 (Fortsetzung)

| Bohrsspülungen | Wasserverlust nach API/$cm^3$ | | scheinbare Viskosität | | Fließgrenze | |
|---|---|---|---|---|---|---|
| | bei 20 °C | 15 h/200 °C | bei 20 °C | 15 h/200 °C | bei 20 °C | 15 h/200 °C |
| Basisspülung + 10 g Polyacrylsäure + 10 g Gips | 22 | 30 | 28 | 18 | 24 | 4 |

Mischpolymerisat A:

90% Acrylsäure
10% Na-Methallylsulfonat

Mischpolymerisat B:

65% Acrylsäure
35% Acrylamidopropenylmethylensulfonat

Die Bohrspülungen wurden bei 20°C und dann nach 15 Stunden Alterung bei 200°C gemessen. Der K-Wert

der Polymere (Fikentscher, Cellulose-Chemie 13, 1932, S. 58) betrug bei den Polymeren ca. 60. Die scheinbare Viskosität und die Fließgrenze wurden mit dem FANN-Viskosimeter 35 SA gemessen. Der Wasserverlust nach API ist die Filtrationsrate in 30 Min. nach « API Code 29 » mit einer genormten Filterpresse bei 7 kg/$cm^2$.

3. Zementschlämme

a. Zusammensetzung:

349 g Wasser
792 g Zement Klasse G

| | Wasserverlust API ($cm^3$) | scheinb. Visk. (mPas) | Fließgrenze (lbs/100 sq/ft) |
|---|---|---|---|
| Zementschlamm ohne Additiv | ∞ | 54 | 53 |
| Mischpolymerisat A aus Beispiel 2 | 9,0 | 30 | 2 |
| Mischpolymerisat B aus Beispiel 2 | 6,5 | 27 | 1 |

Die Einsatzmenge der Mischpolymerisate beträgt jeweils 0,75%. Scheinbare Viskosität und Fließgrenze wurden mit dem FANN-Viskosimeter 35 SA ermittelt.

b. Zusammensetzung:

349 g Wasser
792 g Zement Klasse D

| | Einsatzmenge % | Wasserverlust API/$cm^3$ | scheinb. Visk. (mPas) | Fließgrenze (lbs/100 sq/ft) |
|---|---|---|---|---|
| Zementschlamm ohne Additive | | | 44 | 16 |
| Mischpolymerisat B aus Beispiel 2 | 0,35 | 31,0 | 30 | 2 |
| | 1 | 4,0 | 31 | 1 |
| | 3 | 1,9 | 34 | 1 |
| | 6 | 0,8 | 38 | 2 |

4. Feststoffsuspension auf Basis Bariumsulfat, Gips, Kalziumkarbonat und Kohle.

a) Bariumsulfat
Der Feststoffgehalt beträgt 80 Gew.-%,
die Dispergatorkonzentration 0,25 Gew.-%

b) Gips: $CaSO_{4.2\ H_2O}$
Der Feststoffgehalt beträgt 55 Gew.-%,
die Dispergatorkonzentration 1,0 Gew.-%

c) Kalziumkarbonat
Der Feststoffgehalt beträgt 55 Gew.-%,
die Dispergatorkonzentration 0,25 Gew.-%

d) Kohle
Der Feststoffgehalt beträgt 70 Gew.-%,

die Dispergatorkonzentration 0,25 Gew.-%.

Alle Versuche wurden mit einem Dispergator durchgeführt, der einen K-Wert von ca. 60 hatte und wie folgt zusammengesetzt war:

65 Gew.-% Acrylsäure
30 Gew.-% Acrylamidomethylenpropenylsulfonsäure
5 Gew.-% Methylsulfonsäure

alle Monomere lagen als Natriumsalze vor.

## Patentansprüche

1. Verwendung von Copolymeren bestehend zu 5-95 Gew.-% aus (Meth)acrylsäure oder deren Ammonium- oder Alkalisalzen oder teilverseiftem (Meth) acrylamid und zu 5-95 Gew.-% aus Gruppen der Formel II, III oder IV

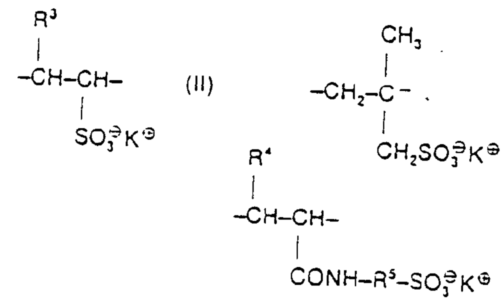
(II) (III) (IV)

wobei $R^3$Wasserstoff, $C_1$-$C_6$-Alkyl oder Phenyl, $R^4$ ein Wasserstoffatom oder $CH_3$ und $R^5C_1$-$C_{10}$-Alkylen und $K^+$ Ammonium, Lithium, Natrium oder Kalium bedeuten, ausgenommen solche Copolymeren, die aus hydrolysiertem Acrylamid und 2-Acrylamido-2-methylpropansulfonsäure oder aus Acrylamid bzw. Acrylsäure und Ethylensulfonat bestehen, als Dispergiermittel in Zementschlämmen und Bohrspülungen.

2. Zementschlämme und Bohrspülungen, dadurch gekennzeichnet, daß sie Mischpolymerisate nach Anspruch 1 in Konzentration von 5 ppm bis 20 Gew.-%, vorzugsweise 10 ppm bis 5 Gew.-%, enthalten.

3. Zementschlämme und Bohrspülungen, nach Anspruch 2 dadurch gekennzeichnet, daß sie die zu dispergierenden Feststoffe in Konzentration von 10 ppm bis 80 Gew.-%, vorzugsweise 50 ppm bis 65 Gew.-%, enthalten.

## Claims

1. The use of a copolymer comprising 5 - 95% by weight of ( meth ) acrylic acid or ammonium or alkali metal salts thereof or partly hydrolyzed ( meth ) acrylamide and of 5 - 95% by weight of groups of the formula II, III or IV

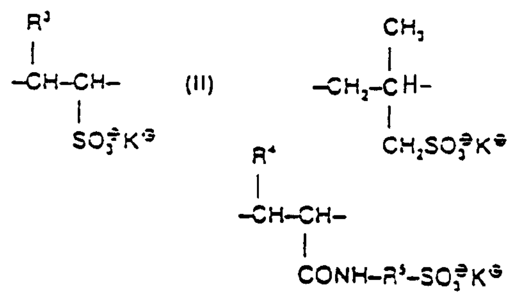
(II) (III) (IV)

in which $R^3$ denotes hydrogen, $C_1$-$C_6$-alkyl or phenyl, $R^4$ denotes a hydrogen atom or $CH_3$, and $R^5$ denotes $C_1$-$C_{10}$-alkylene and $K^+$ denotes ammonium, lithium, sodium or potassium, excluding those copolymers which consist of hydrolyzed acrylamide and 2-acrylamido-2-methylpropane-sulfonic acid or of acrylamide or acrylic acid

and ethylene sulfonate, as dispersant in cement slurries and drilling muds.

2. A cement slurry or drilling mud which contains a copolymer as claimed in claim 1 in a concentration of 5 ppm to 20% by weight, preferably 10 ppm to 5% by weight.

3. A cement slurry or drilling mud as claimed in claim 2, which contains the solids to be dispersed in a concentration of 10 ppm to 80% by weight, preferably 50 ppm to 65% by weight.

**Revendications**

1. Application de copolymères constitués de 5 à 95 % en poids d'acide acrylique ou d'acide méthacrylique ou de leurs sels d'ammoniums ou de métaux alcalins ou d'acrylamide ou de méthacrylamide partiellement saponifiés et de 5 à 95 % en poids de radicaux répondant à l'une des formules II, III et IV :

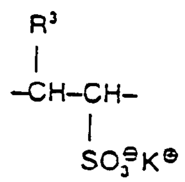
(II)

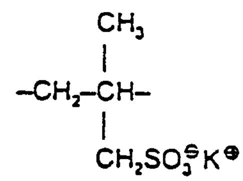
(III)

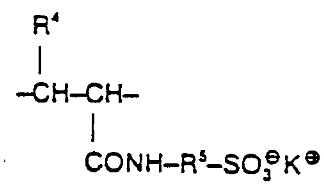
(IV)

dans lesquelles $R^3$ représente l'hydrogène, un alkyle en $C_1$-$C_6$ ou un phényle, $R^4$ représente un atome d'hydrogène ou -$CH_3$ et $R^5$ représente un alkylène en $C_1$-$C_{10}$, et $K^+$ représente un ammonium, le lithium, le sodium ou le potassium,
sauf les copolymères constitués d'acrylamide hydrolysé et d'acide 2-acryloylamino-2-méthylpropane-sulfonique ou d'acrylamide ou d'acide acrylique et d'éthylène-sulfonate, comme dispersants dans des laits de ciment et des boues de forage.

2. Laits de ciment et boues de forage caractérisés en ce qu'ils contiennent des copolymères selon la revendication 1 en une concentration de 5 ppm à 20 % en poids, de préférence de 10 ppm à 5 % en poids.

3. Laits de ciment et boues de forage selon la revendication 2, caractérisés en ce qu'ils contiennent les matières solides à disperser en une concentration de 10 ppm à 80 % en poids, de préférence de 50 ppm à 65 % en poids.